# EUROPEAN PATENT SPECIFICATION

(11) **EP 2 725 279 B1**
(45) Date of publication and mention of the grant of the patent: **31.08.2016**
(21) Application number: 12190301.7
(22) Date of filing: 26.10.2012
(51) Int. Cl.: F16M 11/04, F16M 13/02, F16B 2/10

(54) **Fixer for handheld, portable, mobile device**
Fixiervorrichtung für tragbares mobiles Handgerät
Fixateur pour portatif, portable, dispositif mobile

(43) Date of publication of application: 30.04.2014
(73) Proprietor: Chang, Michael Chau-Lun, Zhongshan Dist., 104 Taipei City (TW)
(72) Inventor: Chang, Michael Chau-Lun, Zhongshan Dist., 104 Taipei City (TW)
(74) Representative: Lang, Christian

(56) References cited:
- WO-A2-2012/016158
- DE-U1-202011 051 755
- US-A1- 2010 038 505
- US-A1- 2012 068 504
- US-A1- 2012 131 826

## Description

### BACKGROUND OF THE INVENTION

### 1. Technical Field

The present invention relates to fixers for handheld, portable, and/or mobile devices, and more particularly, to a fixer that is portable and configured to hold and thereby suspend a mobile electronic device, such as a mobile phone, a portable game player, an electronic book, a GPS device or a tablet computer.

### 2. Description of Related Art

Recently, handheld, mobile devices such as mobile phones and tablet computers have been popular, and nowadays almost everyone has one. While these mobile devices are relatively compact and light-weight, holding them in hand for a sustained time period is still a significant, accumulative burden to muscle, and this is particularly true for people lacking exercise.

There are some fixers designed for small-size mobile devices, but these fixers commonly fail to provide the advantages desired by users, such as being easy to mount and dismount, being compact and light, and being retractable, thereby being more portable.

The existing fixing tools for mobile devices are mainly using a flexible hose ended with a clamp that is configured to hold the whole tool on a table plate. While such an existing fixing tool is effective in suspending a mobile device over a table, it is structurally weak and tends to deform and come down after a long term of suspension. Also due to its weakness, for operating the mobile device, a user has to first use one hand support the mobile device from its back and then use the other hand to touch the touch screen. Thus causes the existing fixing tools to be unfavorable to mobile device operation.

Moreover, in the existing fixing tool, the clamp can only work well with a planar support. However, when leaving a house and used in a public transportation vehicle, such as a MRT train, a subway or a bus, where there are only vertical mop stick handrails, the fixing tool fails because its clamp cannot engage with the handrails effectively. The above-mentioned problems are for us to solve.

Document DE 20 2011 051755 U1 according to the preamble of claim 1, which discloses an adjusting device for a music instrument stand, wherein a positioning frame is linked with an securing member, wherein the securing member defines an approximately cylindric fixing compartment to engage with a vertical column of the music instrument stand.

US 2012/068504 A1 refers to a fixer for handheld, portable, mobile devices on a seat with a foldable extension rod.

WO 2012/016158 A2 discloses a fixer for handheld, portable, mobile devices to grasp a flat surface comprising an extension rod, a positioning frame, deposited at one end of the extension rod, for holding and positing an external mobile device, and a securing member.

### SUMMARY OF THE INVENTION

The present invention is defined in claim 1. Advantageous embodiments are subject matter of the dependent claims.

The present invention provides a portable fixer for holding and thereby suspending a mobile electronic device, such as a mobile phone, a portable game player, an electronic book, a GPS device or a tablet computer. The primary objective of the present invention is to suspend a mobile device with proper overall rigidity, so that a user can operate the suspended mobile device by touching or sliding on its touch screen without displacing the mobile device from where it is positioned. Also, the disclosed fixer is configured to firmly grasp a smooth, vertical rod, so that a user riding a public transportation vehicle can conveniently suspend and use his/her mobile device in the vehicle, wherein the fixer supports the mobile device with proper overall rigidity, so that a user can operate the suspended mobile device by touching or sliding on its touch screen. Thereby, the present invention is helpful to prevent users' muscle fatigue and ache caused by overuse of neck and shoulder muscles.

To achieve the foregoing objective, the present invention provides a fixer for handheld, portable, mobile devices, which comprises:
an extension rod;
a positioning frame, deposited at one end of the extension rod, for holding and positing an external mobile device;
a securing member, deposited at an opposite end of the extension rod, for attaching and securing the extension rod and the positioning frame onto an external article, so as to suspend the mobile device, wherein the external article is a planar or a bar-like article; and
a locking unit, deposited on the securing member, for fixing the securing member to the external article;
wherein the extension rod is rigid in a vertical direction or in a horizontal direction, and the securing member is configured to grasp a horizontal or vertical, planar or bar-like article, so that when a user touches and operates the mobile device, the mobile device is strongly positioned over the external article by the extension rod and the locking unit, and is prevented from swinging and displacing.

### BRIEF DESCRIPTION OF THE DRAWINGS

FIG. 1 is a front view of a first embodiment of the present invention;
FIG. 2 is a top view of FIG. 1;
FIG. 3 is a side view of FIG. 1;
FIG. 4 is a front view of an additional fixer;
FIG. 5 is a front view of another additional fixer;
FIG. 6 is a top view of FIG. 5;
FIG. 7 is a partially enlarged applied view of FIG. 5;
FIG. 8 is a front view of another additional mode of the present invention;
FIG. 9 is an applied view of the present invention;
FIG. 10 is another applied view of a fixer;
FIG. 11 is a perspective view of an additional positioning frame;
FIG. 12 is a front view of a further fixer;
FIG. 13 is a partially enlarged cross-sectional view of FIG. 12;
FIG. 14 is a front view of a third embodiment of the present invention; and
FIG. 15 is a front view of a further fixer.

### DETAILED DESCRIPTION OF THE INVENTION

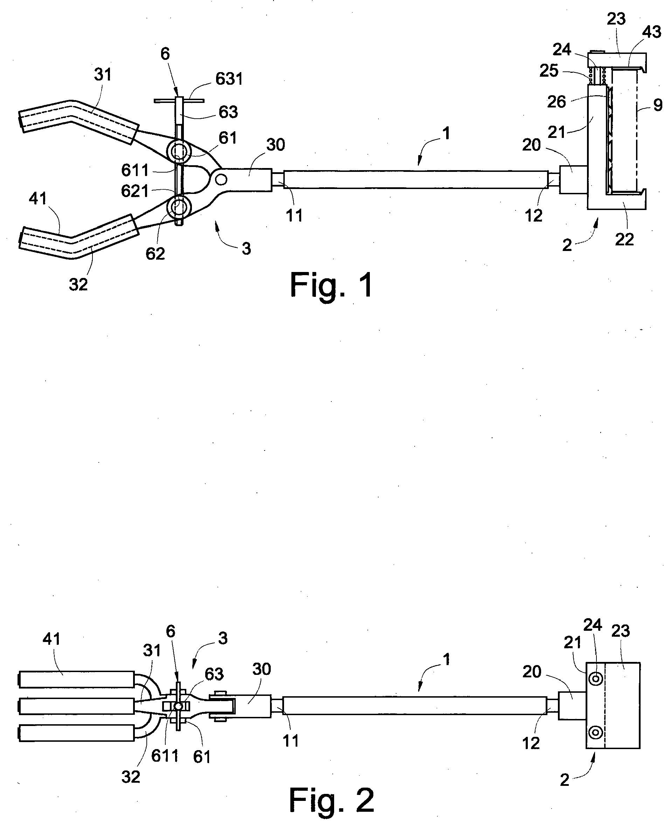

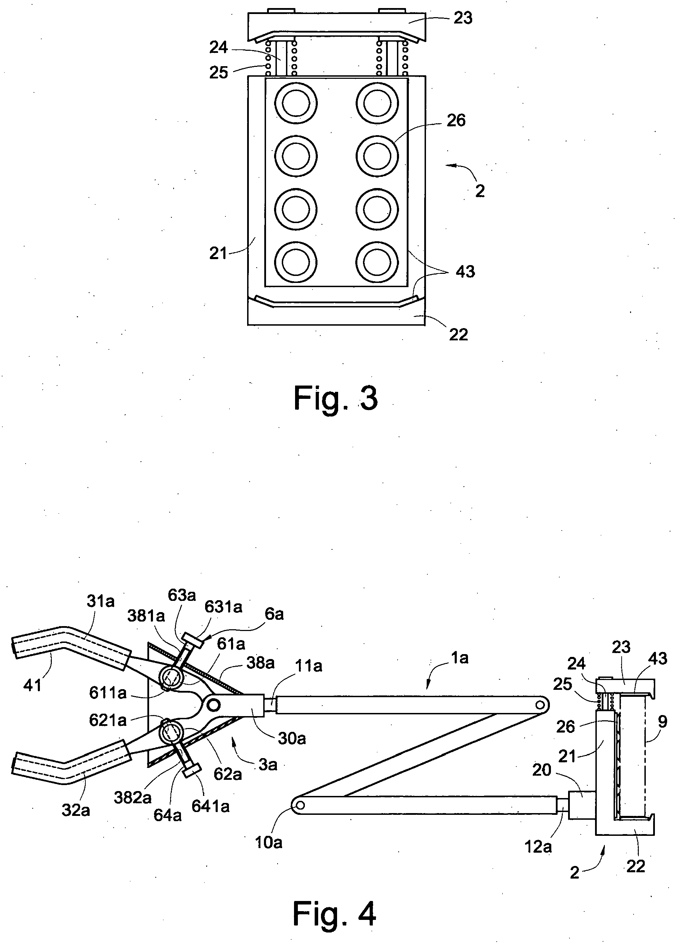

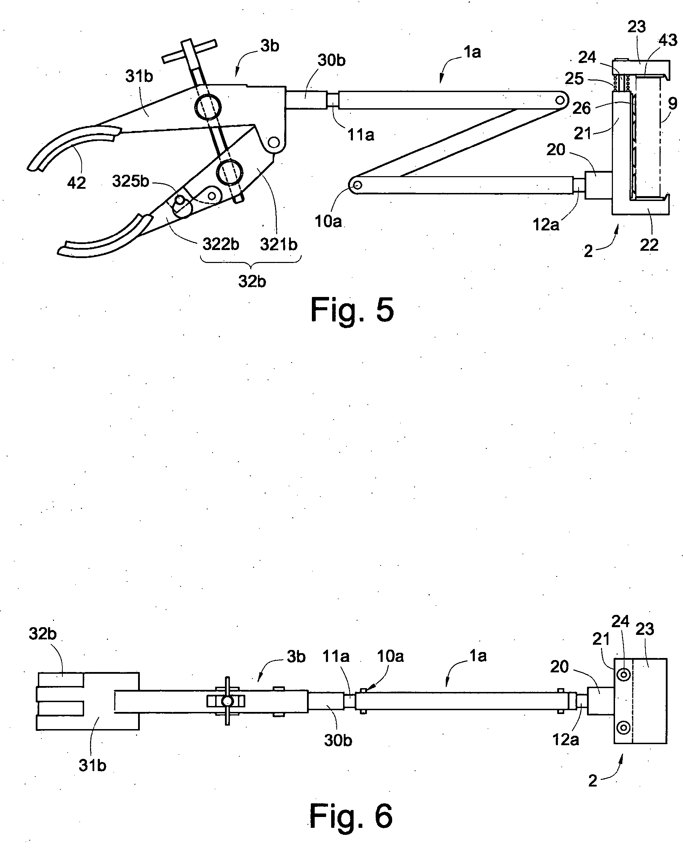

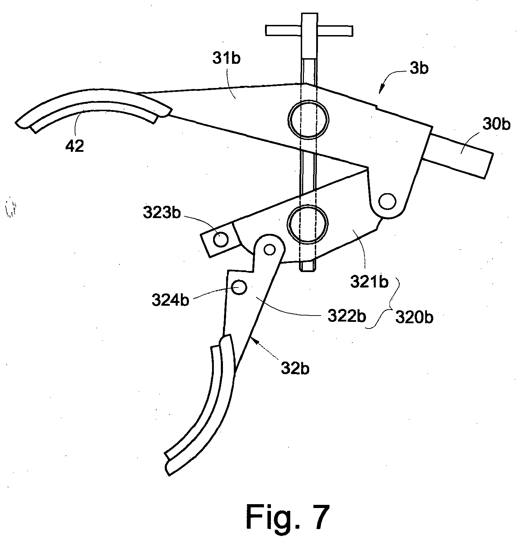

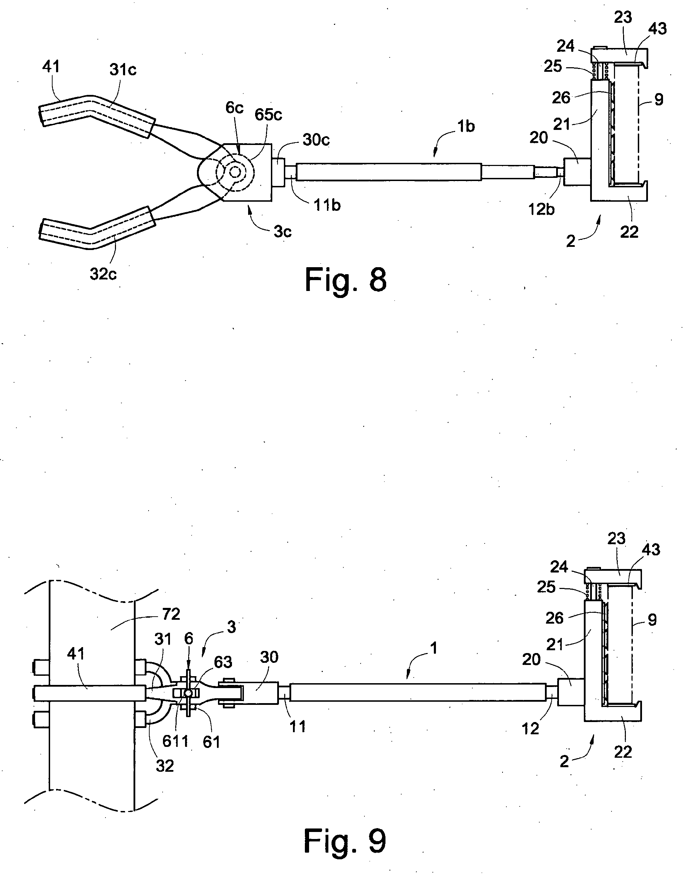

Referring to FIG. 1 through FIG. 10, what is depicted therein is a first fixer. This fixer for handheld, portable, mobile devices comprises:
an extension rod 1;
a positioning frame 2, provided at one end of the extension rod 1, for holding and positioning an external mobile device 9, wherein the mobile device 9 may be a mobile phone, a portable game player, an electronic book, a GPS device or a tablet computer;
a securing member 3, provided at the other end of the extension rod 1, for attaching and securing the extension rod 1 and the positioning frame 2 onto an external article, thereby suspending the mobile device 9 over the external article that may be a planar or a bar-like article; and
a locking unit 6, deposited on the securing member 3, for fixing the securing member 3 to the external article.

The extension rod 1 is rigid in either the vertical direction or the horizontal direction and is extendable. The securing member 3 is configured to rapidly and firmly grasp the external article no matter it is a horizontal or vertical planar structure, a cylinder or a lengthwise rod, pole or bar-like support, so as to support the mobile device 9 for a user to operate. When operated by the user, the mobile device 9 is strongly positioned over the external article by the extension rod 1 and the locking unit 6, and is prevented from swinging and displacing.

The rod may be a horizontal handrail 71 or a vertical handrail 72 provided in a public transportation vehicle for passengers to hold.

The securing member 3 has at least one movable clamping jaw 31, 32.

The securing member 3 has at least two symmetrical movable clamping jaws 31 and 32. The locking unit 6 comprises pivots 61 and 62 provided on the clamping jaws 31 and 32, respectively. Each of the pivots 61 and 62 is formed with a threaded hole 611 or 621. The locking unit 6 also includes a threaded bolt 63 screwedly passing through the threaded holes 611 and 621 of the pivots 61 and 62 of the clamping jaws 31 and 32. The threaded bolt 63 serves to adjust an included angle between the clamping jaws 31 and 32 unilaterally, so as to hold or release the external article. The threaded bolt 63 has one end provide with an adjusting lever 631 for a user to operate and thereby drive the threaded bolt 63 to rotate.

Alternatively, the securing member 3a has at least two symmetrical movable clamping jaws 31a and 32a and a sheath 38a housing the clamping jaws 31a and 32a at their roots. The locking unit 6a comprises pivots 61a and 62a provided on the clamping jaws 31a and 32a, respectively. Each of the pivots 61a and 62a has a threaded hole 611a or 621a, and the sheath 38a is formed with two threaded holes 381a and 382a aligned with the pivots 61a and 62a, respectively, so that two threaded bolts 63a and 64a can pass through the aligned holes 611a and 621a on the pivots 61a and 62a of the clamping jaws 31a and 32a and the threaded holes 381a and 382a of the sheath 38a, respectively. The threaded bolts 63a and 64a serve to serves to adjust an included angle between the clamping jaws 31a and 32a bilaterally, so as to hold or release the external article. Each of the threaded bolts 63a and 64a has one end provided with an adjusting lever 631a or 641a for a user to operate and thereby drive the threaded bolt 63a or 64a to rotate.

Alternatively, the securing member 3c has at least two symmetrical movable clamping jaws 31c and 32c and the locking unit 6c includes a driver 65c on the securing member 3c for driving the clamping jaws 31c and 32c and thereby adjusting an included angle between the clamping jaws 31c and 32c. The driver 65c may be a motor.

Two or more sets of the two clamping jaws 31/31a/31c and 32/32a/32c may be provided for holding the external article from two or more directions. In addition, each of the clamping jaws 31, 31a, 31b, 31c, 32, 32a, 32b and 32c of the securing member 3, 3a, 3b or 3c may be provided with a cushion 41 or 42 covering its periphery or inner surface, so as to enhance close connection and friction between the clamping jaw 31, 31a, 31b, 32, 32a or 32b and the external article.

The securing member 3, 3a, 3b or 3c is tailed by a first connecting portion 30, 30a, 30b or 30c, and the end of the extension rod 1, 1a or 1b has a first linking portion 11, 11a or 11b for engaging with the first connecting portion 30, 30a, 30b or 30c of the securing member 3, 3a, 3b or 3c. The first connecting portion 30, 30a, 30b or 30c and the first linking portion 11, 11a or 11b are combined by insertion, buckle engagement, embedding, embracing, rotational connection, pivotal connection, suction, magnetism, screwing connection, velcro tapes, adhesive or being formed integratedly.

The clamping jaw 32b has a releasing device 320b. The releasing device 320b includes a root 321b pivotally connected to the securing member 3b, and a tip 322b that is pivotally connected to the root 321b and is far from the securing member 3b. The root 321b and the tip 322b have their connecting surfaces each provided with a positioning hole 323b or 324b. A positioning rod 325b passes through the positioning holes 323b, 324b so as to fix the tip 322b with respect to the root 321b. When there is an urgent need to detach the securing member 3b from the horizontal handrail 71 or the vertical handrail 72 in the public transportation vehicle, the positioning rod 325b of the releasing device 320b can be pulled out to allow the tip 322b to swing outward, so that the securing member 3b can be invalidated by pulling open the releasing device 320b.

The extension rod 1, 1a or 1b may be a unitary member or a composite member. The extension rod 1b is formed by telescoped tubes, so that the extension rod 1b is allowed to have multi-stage extension, thereby increasing an overall using length of the extension rod 1b.

Alternatively, the extension rod 1a is formed by links pivotally linked by one or more movable joints 10a, so that the extension rod 1a is foldable and is allowed to have multi-stage extension, thereby increasing an overall using length of the extension rod 1a. The movable joint 10a is configured to allow the links to move in different angles and thereby include different angles. The movable joint 10a may be a pivot or a universal joint.

The extension rod 1, 1a or 1b is normally retracted in a compact size for portability, and can be extended in length or adjusted in angle to an extent where a user can conveniently view and operate the screen of the mobile device 9.

The positioning frame 2 has a second connecting portion 20 at its back, and the end of the extension rod 1, 1a or 1b has a second linking portion 12, 12a or 12b for engaging with the second connecting portion 20 of the positioning frame 2. The second connecting portion 20 and the second linking portion 12, 12a or 12b are combined by insertion, buckle engagement, embedding, embracing, rotational connection, pivotal connection, suction, magnetism, screwing connection, velcro tapes, adhesive or being formed integratedly.

The positioning frame 2 comprises a base 21, an immovable bracket 22 deposited at one side of the base 21, and a movable bracket 23 movably deposited at an opposite side of the base 21. The movable bracket 23 is movably provided on the base 21 by slide, pull or rotation of a guide system 24, a rail system, a tooth-notch engagement system or a gear system. The movable bracket 23 and the immovable bracket 22 are first adjusted to fittingly receive the mobile device 9 and then the movable bracket 23 is driven by a screw means, a hydraulic means, a pressuring means, a pulling spring 25, a suction means or a torque means to move toward the immovable bracket 22, so as to hold the mobile device 9 firmly between the movable bracket 23 and the immovable bracket 22 regardless of how the mobile device 9 is sized.

The base 21 of the positioning frame 2 has its inner side, where the mobile device 9 contacts, provided with a cushion 43, so as to enhance the anti-slip effect of the positioning frame 2 on the surface of the mobile device 9.

While the movable bracket 23 of the positioning frame 2 is configured to move at one side of the base 21 for adjusting the capacity of the positioning frame 2, the positioning frame 2 can pivot on the second connecting portion 20 to rotate with respect to the extension rod 1, 1a or 1b up to 90 degrees.

The inner surface of the base 21 or the cushion 43 of the positioning frame 2 is provided with at least one sucking disc 26 for holding the mobile device 9, thereby ensuring close connection between the positioning frame 2 and the mobile device 9 to make the mobile device 9 get secured firmly. The sucking disc 26 may be provided on the base 21 or the cushion 43 by forming integratedly, adhering, embedding or inserting.

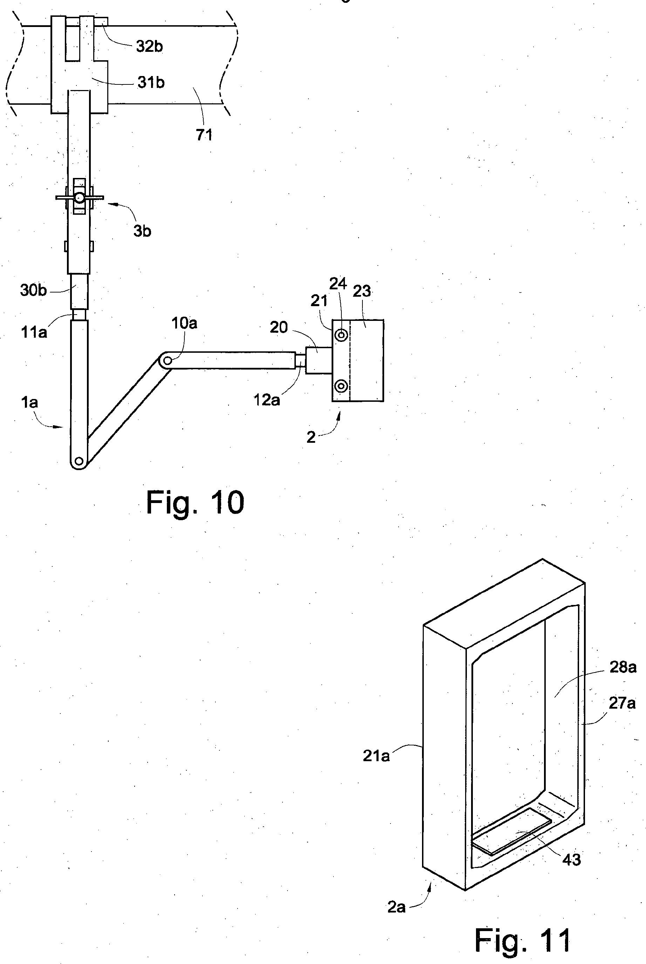

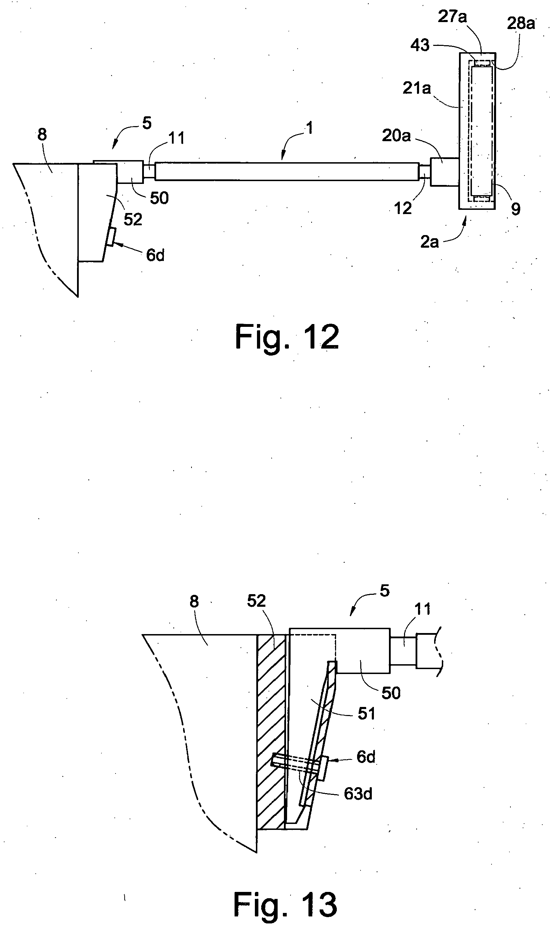

Alternatively, as illustrated in FIG. 11 and FIG. 12, the positioning frame 2a may be an extendable jacket. The jacket has a base 21a and an elastic enclosure 27a circling the base 21a. A positioning recess 28a is defined between the base 21a and the inner wall of the enclosure 27a, for fittingly receiving the mobile device 9. In addition, the base 21a of the positioning frame 2a has a second connecting portion 20a at its back, for engaging with the second linking portion 12 of the extension rod 1.

The positioning frame 2a, at its surface contacting the mobile device 9, is covered by a cushion 43, so as to enhance the anti-slip effect of the positioning frame 2a on the surface of the mobile device 9. The positioning frame 2 is freely adjustable in width so as to rapidly holding the mobile device 9 which may be of any commercially available size, and the positioning frame 2 is rotatable to change the viewing angle of the mobile device 9 received therein.

Thereby, the fixer is highly portable and can be quickly and conveniently attached to a horizontal handrail 71 or a vertical handrail 72 a public transportation vehicle by means of the securing member 3, 3a, 3b or 3c. Then the fixer can hold a mobile device 9, such as a mobile phone, a portable game player, an electronic book, a GPS device or a tablet computer, in the positioning frame 2. Thus, a user can use his/her mobile device 9 in any public transportation vehicle during either a long distance trip or a short distance trip without the need of holding the mobile device 9 with his/her hand. To sum up, the disclosed fixer is highly portable and can be quickly and conveniently mounted on and dismounted from handrail 71 and 72, thereby being helpful to prevent users' muscle fatigue and ache caused by overuse of neck and shoulder muscles.

FIG. 12 and FIG. 13 disclose a second fixer which is different from the first embodiment for the following features.

A securing member 5 has one end provided with a connecting tongue 51 and has a connecting socket 52 that is configured to disassemble/ assemble with the connecting tongue 51 and be fixed to the external article 8. The securing member 5 is assembled to the connecting socket 52 on the external article 8 through the connecting tongue 51. The locking unit 6d includes a threaded bolt 63d screwedly connected between the connecting tongue 51 and the connecting socket 52. The connecting socket 52 is fixed to the external article 8 by, a screw means, a close-fitting means, a buckle means or an adhesive means.

The external article 8 may be a backpack, a hat, a safety helmet, a shoulder strap, a sling, a tie, a brief case, a luggage case, a mask, a helmet, a handle, a wall, a table or a chair. The securing member 5 is combined with the connecting socket 52 on the external article 8 through the connecting tongue 51.

The connecting socket 52 may be formed as a fixing member on any portable article so it can be easily mounted on a user's shoulder, neck or head, or on the user's backpack, a hat or a sling and carried by the user. The connecting socket 52 in this case is made according to a general specification so it can be combined with the extension rod 1.

The connecting tongue 51, at it's the other end, has a first connecting portion 50. The first linking portion 11 of the extension rod 1 is configured to engage with the first connecting portion 50 of the connecting tongue 51. The first connecting portion 50 and the first linking portion 11 are combined by insertion, buckle engagement, embedding, embracing, rotational connection, pivotal connection, suction, magnetism, screwing connection, velcro tapes, adhesive or being formed integratedly. The rest of the second embodiment is similar to the first embodiment in terms of structure and operation.

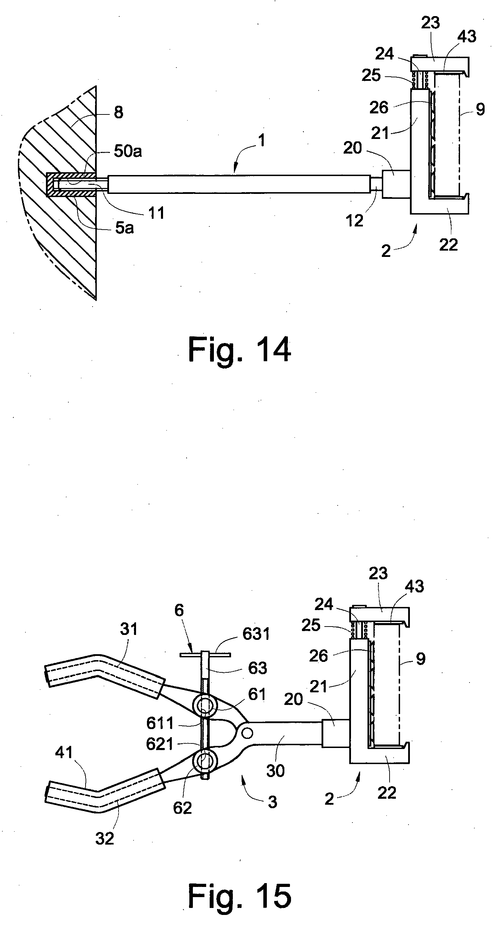

FIG. 14 discloses a third embodiment of a fixer, which is different from the first embodiment for the following features.

A securing member 5a is formed on the external article 8 and has a first connecting portion 50a, while the end of the extension rod 1 has a first linking portion 11 for engaging with the first connecting portion 50a of the securing member 5a. The locking unit may be the first connecting portion 50a, and the first connecting portion 50a may be a threaded hole, while the first linking portion 11 may be a threaded rod. The first connecting portion 50a and the first linking portion 11 are combined by insertion, buckle engagement, embedding, embracing, rotational connection, pivotal connection, suction, magnetism, screwing connection, velcro tapes, adhesive or being formed integrally.

Alternatively, the securing member 5a may be realized as a part of the external article 8, and the first connecting portion 50a in the form of a threaded hole is directly formed on the external article 8.

FIG. 15 discloses a fourth embodiment of a fixer, thereby illustrating the fixer for handheld, portable, mobile devices. The fixer comprises:

a positioning frame 2, for holding and positioning an external mobile device 9;
a securing member 3, deposited at the back of the positioning frame 2, for attaching and securing the positioning frame 2 onto an external article, so as to suspend the mobile device 9, wherein the external article is a planar or bar-like article; and
a locking unit 6, deposited on the securing member 3, for fixing the securing member 3 to the external article.

The securing member 3 is configured to grasp a horizontal or vertical, planar or bar-like article, so that when a user touches and operates the mobile device 9, the mobile device 9 is strongly positioned over the external article by the locking unit 6 and prevented from swinging or displacing.

The securing member 3 has a first connecting portion 30. The back of the positioning frame 2 is provided with a second connecting portion 20 that is configured to engage with the first connecting portion 30 of the securing member 3. The first connecting portion 30 and the second connecting portion 20 are combined by insertion, buckle engagement, embedding, embracing, rotational connection, pivotal connection, suction, magnetism, screwing connection, velcro tapes, adhesive or being formed integrally.

## Claims

1. A fixer for handheld, portable, mobile devices, the fixer comprising:
an extension rod (1);
a positioning frame (2), deposited at one end of the extension rod (1), for holding and positing an external mobile device (9);
a surface of the positioning frame (2) for contacting the mobile device (9) being covered by a cushion (43) for helping the positioning frame (2) to engage with a surface of the mobile device (9);
a securing member (3), deposited at an opposite end of the extension rod (1), for attaching and securing the extension rod (1) and the positioning frame (2) onto an external article, so as to suspend the mobile device (9), wherein the external article is a planar or a bar-like article; and
a locking unit (6), deposited on the securing member (3), for fixing the securing member (3) to the external article;
wherein the extension rod (1) is rigid in a vertical direction or in a horizontal direction, and the securing member (3) is configured to grasp a horizontal or vertical, planar or bar-like article, so that when a user touches and operates the mobile device (9), the mobile device (9) is strongly positioned over the external article by the extension rod (1) and the locking unit (6), and is prevented from swinging and displacing,
characterized in-that
the extension rod (1b) is formed by telescoped tubes, so that the extension rod (1b) is allowed to have multi-stage extension, thereby increasing an overall using length of the extension rod (1b) and wherein the positioning frame includes a base (21), an immovable bracket (22) deposited at one side of the base (21), and a movable bracket (23) movably provided at an opposite side of the base (21); the movable bracket (23) being movably provided at the opposite side of the base (21) by slide, pull or rotation of a guide system (24), a rail system, a tooth-notch engagement system or a gear system; the movable bracket (23) and the immovable bracket (22) being adjusted to fittingly receive the mobile device (9) and then the movable bracket (23) being driven by a screw means, a hydraulic means, a pressuring means, a pulling spring (25), a suction means or a torque means to move toward the immovable bracket (22), so as to hold the mobile device (9) firmly between the movable bracket (23) and the immovable bracket (22) regardless of how the mobile device (9) is sized; and the base (21) or the cushion (43) of the positioning frame (2) being provided with at least one sucking disc (26) for holding the mobile device (9), thereby ensuring close connection between the positioning frame (2) and the mobile device (9) to make the mobile device (9) get secured firmly, wherein the sucking disc (26) is provided on the base (21) or the cushion (43) by forming integrally, adhering, embedding or inserting.

2. The fixer of Claim 1, wherein the positioning frame (2) has a second connecting portion (20), and the extension rod (1) has the end (1, 1a, 1b) provided with a second linking portion (12, 12a, 12b) that is configured to engage with the second connecting portion (20) of the positioning frame (2).

3. The fixer of Claim 1, wherein the securing member (3, 3a, 3b, 3c) has a first connecting portion (30, 30a, 30b, 30c), and the extension rod (1) has the opposite end (1, 1a, 1b) provided with a first linking portion (11, 11a, 11b) that is configured to engage with the first connecting portion (30, 30a, 30b, 30c) of the securing member (3, 3a, 3b, 3c).

4. The fixer of Claim 1, wherein the securing member (5) has one end provided with a connecting tongue (51) and a connecting socket (52) that is configured to disassemble/ assemble with the connecting tongue (51) and be fixed to the external article; the securing member (5) being combined with the connecting socket (52) on the external article through the connecting tongue (51); the locking unit (6d) having a threaded bolt (63d) screwedly connected between the connecting tongue (51) and connecting socket (52); and the connecting tongue (51) having an opposite end provided with a first connecting portion (50), and the extension rod (1) having the opposite end provided with a first linking portion (11) that is configured to engage with the first connecting portion (50) of the connecting tongue (51).

5. The fixer of Claim 1, wherein the securing member (5a) is deposited on the external article (8) and has a first connecting portion (50a), while the extension rod (1) has the opposite end provided with a first linking portion (11) that is configured to engage with the first connecting portion (50a) of the securing member (5a), in which the locking unit is the first connecting portion (50a), and the first connecting portion (50a) is a threaded hole.

6. The fixer of Claim 1, wherein the securing member (3) has at least one movable clamping jaw (31, 32).

7. The fixer of Claim 6, wherein the clamping jaw (31, 32) comprises two symmetrical clamping jaws (31, 32), and the locking unit (6) has a threaded bolt (63) screwedly connected between the clamping jaws (31, 32); the threaded bolt (63) being configured to adjust an included angle between the clamping jaws (31, 32) unilaterally, so as to hold or release the external article; the threaded bolt (63) having one end provided with an adjusting lever (631) for being operated and driving the threaded bolt (63); the locking unit (6) comprising one pivot (61, 62) for each said clamping jaw (31, 32); each said pivot (61, 62) being formed with a threaded hole (611, 612); and the threaded bolt (63) being screwedly passing through the threaded holes (611, 612) of the pivots (61, 62) of the clamping jaws (31, 32).

8. The fixer of Claim 6, wherein the clamping jaw comprises two symmetrical clamping jaws (31a, 32a) and the securing member (3a) has a sheath (38a) partially housing the clamping jaws (31a, 32a); the locking unit (6a) comprising a threaded bolt (62a) screwedly connected between each said clamping jaw (31a, 32a) and the sheath (38a); the threaded bolts (63a, 64a) being configured to adjust an included angle between the clamping jaws (31a, 32a) bilaterally, so as to hold or release the external article; the threaded bolt (63a, 64a) having one end provided with an adjusting lever (631a, 641a) for being operated and driving the threaded bolt (63a, 64a); the locking unit (6a) comprising one pivot (61a, 62a) for each said clamping jaw (31a, 32a); each said pivot (61a, 62a) being formed with a threaded hole (611a, 621a) ; the sheath (38a) being provided with two threaded holes (381a, 382a) each aligned with one said pivot (61a, 62a); and the threaded bolt (63a, 64a) being screwedly passing through one said threaded hole (611a, 621a) of the pivot (61a, 62a) of the clamping jaw (31a, 32a) and the threaded hole (381a, 382a) of the sheath (38a) adjacent to the clamping jaw (31a, 32a).

9. The fixer of Claim 6, wherein the clamping jaw comprises two symmetrical clamping jaws (31c, 32c) and the locking unit (6c) is incorporated in a driver (65c) that is provided at the securing member (3c) and configured to drive the clamping jaws (31c, 32c) and adjust an included angle between the clamping jaws (31c, 32c).

10. The fixer of Claim 6, wherein the clamping jaw (31, 31a, 31b, 31c, 32, 32a, 32b, 32c) is covered by a cushion (41, 42) for helping enhancing close connection and friction between the clamping jaw (31, 31a, 31b, 31c, 32, 32a, 32b, 32c)and the external article.

11. The fixer of Claim 6, wherein the clamping jaw (32b) has a releasing device (320b) that includes a root (321b) pivotally connected to the securing member (3b) and a tip (322b) pivotally connected to the root (321b) at a position far from the securing member (3b), the root (321b) and the tip (322b) each having a positioning hole (323b, 324b) and a positioning rod (325b) passing through the positioning holes (323b, 324b) pivotally connecting the root (321b) with the tip (322b).

## Patentansprüche

1. , Fixiervorrichtung für tragbare, mobile Handgeräte, wobei die Fixiervorrichtung umfasst:
einen Verlängerungsstab (1),
einen Positionierungsrahmen (2), der an einem Ende des Verlängerungsstabs (1) angeordnet ist, urn ein externes Mobilgerät (9) zu halten und zu positionieren, wobei eine Oberfläche des Positiomerungsrahmens (2), die mit dem Mobilgerät (9) in Berührung kommt, mit einer Polsterung (43) bedeckt ist, die dem Positiomerungsrahmen (2) dabei hilft, um mit einer Oberfläche des Mobilgeräts (9) in Kontakt zu kommen,
ein Befestigungselement (3), das an einem entgegengesetzten Ende des Verlängerungsstabs (1) angeordnet ist, um den Verlängerungsstab (1) und den Positionierungsrahmen (2) an einem externen Gegenstand anzubringen und zu fixieren, sodass das Mobilgerät (9) gehalten wird, wobei der externe Gegenstand ein planer oder ein stabförmiger Gegenstand ist, und
eine Feststelleinheit (6), die an dem Befestigungselement (3) vorgesehen ist, um das Befestigungselement (3) an dem externen Gegenstand zu fixieren,
wobei der Verlängerungsstab (1) in einer vertikalen Richtung oder in einer horizontalen Richtung steif ist, und wobei das Befestigungselement (3) zum Greifen eines horizontalen oder vertikalen, planen oder stabförmigen Gegenstands konfiguriert ist, sodass, wenn ein Benutzer das Mobilgerät (9) berührt und bedient, das Mobilgerät (9) durch den Verlängerungsstab (1) und die Feststelleinheit (6) stabil über dem externen Gegenstand positioniert ist und ein Schaukeln oder Verschieben desselben verhindert wird,
**dadurch gekennzeichnet, dass**
der Verlängerungsstab (1b) durch Teleskopohre ausgebildet ist, sodass der Verlängerungsstab (1b) eine mehrstufige Verlängerung ermöglicht, wodurch eine Gesamtnutzungslänge des Verlängerungsstabs (1b) erhöht wird, und
wobei der Positiomerungsrahmen eine Basis (21), einen unbeweglichen Bügel (22), der an einer Seite der Basis (21) angeordnet ist, und einen beweglichen Bügel (23) beinhaltet, der beweglich an einer gegenüberliegenden Seite der Basis (21) vorgesehen ist, wobei der bewegliche Bügel (23) durch Verschieben, Ziehen oder Drehen eines Fuhrungssystems (24), eines Schienensystems, eines Zahn- Kerbe- Eingriffssystems oder eines Getriebesystems beweglich an der gegenüberliegenden Seite der Basis (21) bereitgestellt ist, wobei der bewegliche Bügel (23) und der unbewegliche Bügel (22) so eingestellt werden, dass das Mobilgerät (9) passend aufgenommen werden kann, und wobei der bewegliche Bügel (23) dann durch eine Schraubvorrichtung, eine hydraulische Vorrichtung, eine Druckvorrichtung, eine Zugfeder (25), eine Ansaugvorrichtung oder eine Drehmomentvorrichtung angetrieben wird, um sich in Richtung des unbeweglichen Bügels (22) zu bewegen, sodass das Mobilgerät (9) unabhängig von den Abmessungen des Mobilgeräts (9) fest zwischen dem beweglichen Bügel (23) und dem unbeweglichen Bügel (22) gehalten wird, wobei die Basis (21) oder die Polsterung (43) des Positionierungsiahmens (2) mit wenigstens einem Saugnapf (26) zum Halten des Mobilgeräts (9) ausgebildet ist, wodurch eine enge Verbindung zwischen dem Positionierungsrahmen (2) und dem Mobilgerät (9) gewährleistet ist, sodass das Mobilgerät (9) sicher befestigt werden kann, wobei der Saugnapf (26) durch integrales Ausbilden, Anhaften, Einbetten oder Einstecken an der Basis (21) oder der Polsterung (43) angebracht ist

2. . Fixiervorrichtung nach Anspruch 1, bei welcher der Positionierungsrahmen (2) einen zweiten Befestigungsabschnitt (20) aufweist und der Verlängerungsstab (1) ein Ende (1, 1a, 1b) hat, das mit einem zweiten Verbindungsabschnitt (12, 12a, 12b) versehen ist, der so konfiguriert ist, dass er mit dem zweiten Befestigungsabschnitt (20) des Positiomerungsrahmens (2) in Eingriff kommt.

3. . Fixiervorrichtung nach Anspruch 1, bei welcher das Befestigungselement (3, 3a, 3b, 3c) einen ersten Befestigungsabschnitt (30, 30a, 30b, 30c) aufweist und der Verlängerungsstab (1) an dem nebenstehenden Ende (1, 1a, 1b) mit einem ersten Verbindungsabscbnitt (11, 11a, 11b) ausgebildet ist, der so konfiguriert ist, dass er mit dem ersten Befestigungsabschnitt (30, 30a, 30b, 30c) des Befestigungselements (3, 3a, 3b, 3c) ineinandergreift.

4. . Fixiervorrichtung nach Anspruch 1, bei welcher das Befestigungselement (5) ein Ende, das mit einer Anschlußzunge (51) versehen ist, und einen Anschlusssockel (52) aufweist, der zum Einbauen / Ausbauen der Anschlusszunge (51) konfiguriert ist und an dem externen Gegenstand angebracht werden kann, wobei das Befestigungselement (5) durch die Anschlusszunge (51) mit dem Anschlusssockel (52) an dem externen Gegenstand verbunden ist, wobei die Feststelleinheit (6d) einen Gewindebolzen (63d) aufweist, der die Anschlusszunge (51) und den Anschlusssockei (52) durch Verschrauben miteinander verbindet, und wobei die Anschlusszunge (51) an einem entgegengesetzten Ende mit einem ersten Befestigungsabschnitt (50) ausgebildet ist, wobei das nebenstehende Ende des Verlängerungsstabs (1) mit einem ersten Verbindungsabschnitt (11) versehen ist, der so konfiguriert ist, dass er mit dem ersten Befestigungsabschnitt (50) der Anschlusszunge (51) in Eingriff kommt.

5. . Fixiervorrichtung nach Anspruch 1, bei welcher das Befestigungselement (5a) an dem externen Gegenstand (8) angebracht ist und einen ersten Befestigungsabschnitt (50a) aufweist, wobei der Verlängerungsstab (1) an dem nebenstehenden Ende mit einem ersten Verbindungsabschnitt (11) versehen ist, der so konfiguriert ist, dass er mit dem ersten Befestigungsabschnitt (50a) des Befestigungselements (5a) in Eingriff kommt, wobei die Feststelleinheit der erste Befestigungsabschnitt (50a) ist und der erste Befestigungsabschnitt (50a) eine Gewindebohrung ist.

6. . Fixiervorrichtung nach Anspruch 1, bei welcher das Befestigungselement (5a) wenigstens eine bewegliche Klemmbacke (31, 32) hat.

7. . Fixiervorrichtung nach Anspruch 6, bei welcher die Klemmbacke (31, 32) zwei symmetrische Klemmbacken (31, 32) umfasst und die Feststelleinheit (6) einen Gewindebolzen (63) aufweist, der durch Verschrauben mit den Klemmbacken (31, 32) in Vebindung steht, wobei der Gewindebolzen (63) so konfiguriert ist, dass ein Öffnungswinkel zwischen den Klemmbacken (31, 32) unilateral verstellt werden kann, sodass der externe Gegenstand festgehalten oder losgelassen wird, wobei ein Ende des Gewindebolzens (63) zur Betätigung und zum Antrieb des Gewindebolzens (63) mit einem Einstellhebel (631) ausgebildet ist, wobei die Feststelleinheit (6) ein Drehgelenk (61, 62) für jede besagte Klemmbacke (31, 32) umfasst, wobei jedes besagte Drehgelenk (61, 62) mit einer Gewindebohrung (611, 612) ausgebildet ist, und wobei der Gewindebolzen (63) durch Verschrauben durch die Gewindebohrungen (611, 612) der Drehgelenke (61, 62) der Klemmbacken (31, 32) hindurchgeführt ist.

8. . Fixiervorrichtung nach Anspruch 6, bei welcher die Klemmbacke zwei symmetrische Klemmbacken (31a, 32a) umfasst und das Befestigungselement (3a) eine Ummantelung (38a) aufweist, in welcher die Klemmbacken (31 a, 32a) teilweise aufgenommen sind, und wobei die Feststelleinheit (6a) einen Gewindebolzen (62a) umfasst, der durch Verschrauben jede der besagten Klemmbacken (31a, 32a) mit der Ummantelung (38a) verbindet, wobei die Gewindebolzen (63a, 64a) derart konfiguriert sind, um einen Öffnungswinkel zwischen den Klemmbacken (31a, 32a) bilateral zu verstellen, sodass der externe Gegenstand festgehalten oder losgelassen wird, wobei ein Ende des Gewindebolzens (63a, 64a) zur Betätigung und zum Antrieb des Gewindebolzens (63a, 64a) mit einem Einstellhebel (631a, 641a) ausgebildet ist, wobei die Feststelleinheit (6a) ein Drehgelenk (61a, 62a) für jede besagte Klemmbacke (31a, 32a) umfasst, wobei jedes besagte Drehgelenk (61a, 62a) mit einer Gewindebohrung (611a, 621a) ausgebildet ist, wobei die Ummantelung (38a) mit zwei Gewindebohrungen (381a, 382a) versehen ist, von denen jede entsprechend einem der besagten Drehgelenke (61a, 62a) ausgerichtet ist, und wobei der Gewindebolzen (63a, 64a) so eingeschraubt ist, dass er durch eine besagte Gewindebohrung (611 a, 621a) des Drehgelenks (61a, 62a) der Klemmbacke (31a, 32a) und die Gewindebohrung (381a, 382a) der Ummantelung (38a), welche zu der Klemmbacke (31a, 32a) benachbart ist, hindurchgeht.

9. . Fixiervorrichtung nach Anspruch 6, bei welcher die Klemmbacke zwei symmetrische Klemmbacken (31c, 32c) umfasst und die Feststelleinheit (6c) in einen Mitnehmer (65c) integriert ist, der an dem Befestigungselement (3c) vorgesehen ist und zum Antrieb der Klemmbacken (31c, 32c) und zum Einstellen eines Öffnungswinkels zwischen den Klemmbacken (31c, 32c) konfiguriert ist.

10. . Fixiervorrichtung nach Anspruch 6, bei welcher die Klemmbacken (31, 31a, 31b, 31c, 32, 32a, 32b, 32c) mit einer Polsterung (41, 42) bedeckt ist, welche dazu beiträgt, dass die enge Verbindung und die Reibung zwischen der Klemmbacke (31, 31a, 31b, 31c, 32, 32a, 32b, 32c) und dem externen Gegenstand verbessert ist.

11. . Fixiervorrichtung nach Anspruch 6, bei welcher die Klemmbacke (32b) eine Entriegelungsvorrichtung (320b) aufweist, die einen Fuß (321b), der schwenkbar mit dem Befestigungselement (3b) verbunden ist, und eine Spitze (322b) beinhaltet, die schwenkbar mit einer Stelle des Fußes (321b) verbunden ist, die von dem Befestigungselement (3b) entfernt ist, wobei der Fuß (321b) und die Spitze (322b) jeweils ein Positionierungsloch (323b, 324b) aufweisen und ein Positionierstab (325b) durch die Positiotnerungslöcher (323b, 324b) hindurchgeführt ist, um den Fuß (321b) und die Spitze (322b) schwenkbar miteinander zu verbinden.

## Revendications

1. Fixation pour dispositifs mobiles portables tenus à la main, la fixation comprenant :
une tige d'extension (1) ;
un cadre de positionnement (2), déposé à une extrémité de la tige d'extension (1), pour maintenir et positionner un dispositif mobile externe (9), une surface du cadre de positionnement (2) pour être en contact avec le dispositif mobile (9) étant couverte par un coussin (43) pour aider le cadre de positionnement (2) à se mettre en prise avec une surface du dispositif mobile (9) ;
un organe de fixation (3), déposé à une extrémité opposée de la tige d'extension (1), pour attacher et fixer la tige d'extension (1) et le cadre de positionnement (2) sur un article externe de manière à suspendre le dispositif mobile (9), l'article externe étant un article plan ou semblable à une barre et
une unité de verrouillage (6), déposée sur l'organe de fixation (3), pour fixer l'organe de fixation (3) à l'article externe,
la tige d'extension (1) étant rigide dans une direction verticale ou dans une direction horizontale et l'organe de fixation (3) étant configuré pour saisir un article horizontal ou vertical, plan ou semblable à une barre, si bien que, lorsqu'un utilisateur touche et fait fonctionner le dispositif mobile (9), le dispositif mobile (9) est positionné solidement au-dessus de l'article externe par la tige d'extension (1) et l'unité de verrouillage (6) pour éviter qu'il n'oscille et ne se déplace,
**caractérisé en ce que** la tige d'extension (1b) est formée par des tubes télescopiques si bien que la tige d'extension (1b) peut avoir une extension à plusieurs étapes en augmentant une longueur hors tout d'utilisation de la tige d'extension (1b) et le cadre de positionnement comprenant une base (21), une équerre fixe (22) déposée sur un côté de la base (21) et une équerre mobile (23) prévue mobile sur un côté opposé de la base (21), l'équerre mobile (23) étant prévue mobile sur le côté opposé de la base (21) par glissement, traction ou rotation d'un système de guidage (24), un système de rail, un système d'engrènement à dent et encoche ou un système d'engrenage, l'équerre mobile (23) et l'équerre fixe (22) étant ajustées pour recevoir de manière adaptée le dispositif mobile (9) et ensuite l'équerre mobile (23) étant entraînée par un moyen à vis, un moyen hydraulique, un moyen de pressurisation, un ressort de traction (25), un moyen d'aspiration ou un moyen générateur de couple pour se déplacer vers l'équerre fixe (22) de manière à maintenir le dispositif mobile (9) fermement entre l'équerre mobile (23) et l'équerre fixe (22), quelle que soit la manière dont le dispositif mobile (9) est dimensionné, et la base (21) ou le coussin (43) du cadre de positionnement (2) étant prévu avec au moins un disque d'aspiration (26) pour maintenir le dispositif mobile (9) en assurant une connexion étroite entre le cadre de positionnement (2) et le dispositif mobile (9) pour faire en sorte que le dispositif mobile (9) soit fixé solidement, le disque d'aspiration (26) étant prévu sur la base (21) ou le coussin (43) en étant formé d'un seul tenant, par adhésion, encastrement ou insertion.

2. Fixation selon la revendication 1, le cadre de positionnement (2) ayant une seconde portion de connexion (20) et la tige d'extension (1) ayant l'extrémité (1, 1a, 1b) pourvue d'une seconde portion de liaison (12, 12a, 12b) qui est configurée pour se mettre en prise avec la seconde portion de connexion (20) du cadre de positionnement (2).

3. Fixation selon la revendication 1, l'organe de fixation (3, 3a, 3b) ayant une première portion de connexion (30, 30a, 30b, 30c) et la tige d'extension (1) ayant l'extrémité opposée (1, 1a, 1b) pourvue d'une première portion de liaison (11, 11a, 11b) qui est configurée pour se mettre en prise avec la première portion de connexion (30, 30a, 30b, 30c) de l'organe de fixation (3, 3a, 3b, 3c).

4. Fixation selon la revendication 1, l'organe de fixation (5) ayant une extrémité pourvue d'une languette de raccordement (51) et d'une douille de raccordement (52) qui est configurée pour se désassembler/s'assembler avec la languette de raccordement (51) et être fixée à l'article externe, l'organe de fixation (5) étant combiné à la douille de raccordement (52) sur l'article externe par la languette de raccordement (51), l'unité de verrouillage (6d) ayant un boulon fileté (63d) reliée de manière vissée entre la languette de raccordement (51) et la douille de raccordement (52) et la languette de raccordement (51) ayant une extrémité opposée pourvue d'une première portion de connexion (50) et la tige d'extension (1) ayant l'extrémité opposée pourvue d'une première portion de liaison (11) qui est configurée pour se mettre en prise avec la première portion de connexion (50) de la languette de raccordement (51).

5. Fixation selon la revendication 1, l'organe de fixation (5a) étant déposé sur l'article externe (8) et ayant une première portion de connexion (50a) alors que la tige d'extension (1) a l'extrémité opposée pourvue d'une première portion de liaison (11) qui est configurée pour se mettre en prise avec la première portion de connexion (50a) de l'organe de fixation (5a), dans lequel l'unité de verrouillage est la première portion de connexion (50a) et la première portion de connexion (50a) étant un trou fileté.

6. Fixation selon la revendication 1, l'organe de fixation (5a) ayant au moins une mâchoire de serrage mobile (31, 32).

7. Fixation selon la revendication 6, la mâchoire de serrage (31, 32) comprenant deux mâchoires de serrage symétriques (31, 32) et l'unité de verrouillage (6) ayant un boulon fileté (63) relié par vissage entre les mâchoires de serrage (31, 32), le boulon fileté (63) étant configuré pour régler un angle inclus entre les mâchoires de serrage (31, 32) unilatéralement de manière à maintenir ou à débloquer l'article externe, le boulon fileté (63) ayant une extrémité pourvue d'un levier de réglage (631) pour être actionné et pour entraîner le boulon fileté (63), l'unité de verrouillage (6) comprenant un pivot (61, 62) pour chaque mâchoire de serrage mentionnée (31, 32), chaque pivot mentionné (61, 62) étant formé avec un trou fileté (611, 612) et le boulon fileté (63) traversant de manière vissée les trous filetés (611 ; 612) des pivots (61, 62) des mâchoires de serrage (31, 32).

8. Fixation selon la revendication 6, la mâchoire de serrage (31, 32) comprenant deux mâchoires de serrage symétriques (31a, 32a) et l'organe de fixation (3a) ayant une gaine (38a) qui loge partiellement les mâchoires de serrage (31a ; 32a), l'unité de verrouillage (6a) comprenant un boulon fileté (62a) relié de manière vissée entre chaque mâchoire de serrage mentionnée (31a, 32a) et la gaine (38a), les boulons filetés (63a, 64a) étant configurés pour régler un angle inclus entre les mâchoires de serrage (31a, 32a) bilatéralement de manière à maintenir ou à débloquer l'article externe, le boulon fileté (63a, 64a) ayant une extrémité pourvue d'un levier de réglage (631a, 641a) pour être actionné et pour entraîner le boulon fileté (63a, 64a), l'unité de verrouillage (6a) comprenant un pivot (61a, 62a) pour chaque mâchoire de serrage mentionnée (31a, 32a), chaque pivot mentionné (61 a, 62a) étant formé avec un trou fileté (611a, 621a), la gaine (38a) étant pourvue de deux trous filetés (381a, 382a), chacun étant aligné avec un pivot mentionné (61a, 62a) et le boulon fileté (63a, 64a) traversant de manière vissée un trou fileté mentionné (611a, 621a) du pivot (61a, 62a) de la mâchoire de serrage (31a, 32a) et le trou fileté (381a, 382a) de la gaine (38a) adjacent à la mâchoire de serrage (31a, 32a).

9. Fixation selon la revendication 6, la mâchoire de serrage comprenant deux mâchoires de serrage symétriques (31c, 32c) et l'unité de verrouillage (6c) étant incorporée dans un élément de commande (65c) qui est prévu sur l'organe de fixation (3c) et configuré pour entraîner les mâchoires de serrage (31c, 32c) et régler un angle inclus entre les mâchoires de serrage (31c, 32c).

10. Fixation selon la revendication 6, la mâchoire de serrage (31, 31a, 31b, 32, 32a, 32b, 32c) étant couverte par un coussin (41, 42) pour aider à renforcer la connexion étroite et la friction entre la mâchoire de serrage (31, 31a, 31b, 32, 32a, 32b, 32c) et l'article externe.

11. Fixation selon la revendication 6, la mâchoire de serrage (32b) ayant un dispositif de déblocage (320b) qui comprend une racine (321b) qui est reliée en pivotement à l'organe de fixation (3b) et une extrémité (322b) reliée en pivotement à la racine (321b) à une position éloignée de l'organe de fixation (3b), de la racine (321b) et de l'extrémité (322b), chacun ayant un trou de positionnement (323b, 324b) et une tige de positionnement (325b) qui traverse les trous de positionnement (323b, 324b) en reliant en pivotement la racine (321b) et l'extrémité (322b).
